# EUROPÄISCHE PATENTSCHRIFT

(11) **EP 0 679 828 B1**
(45) Veröffentlichungstag und Bekanntmachung des Hinweises auf die Patenterteilung: **02.09.1998**
(21) Anmeldenummer: 95106209.0
(22) Anmeldetag: 25.04.1995
(51) Int. Cl.: F16L 37/084

(54) **Steckverbindung für eine pneumatische oder hydraulische Leitung und deren Verwendung an einem dentalen Arbeitsplatz**
Connector for a pneumatic or hydraulic conduit and its use in a dental work station
Connecteur pour conduite pneumatique ou hydraulique et son utilisation dans le domaine dentaire

(30) Priorität: 28.04.1994 DE 4414935
(43) Veröffentlichungstag der Anmeldung: 02.11.1995
(73) Patentinhaber: KALTENBACH & VOIGT GMBH & CO., 88400 Biberach (DE)
(72) Erfinder: Püschner, Georg, D-88299 Leutkirch (DE)
(74) Vertreter: Schmidt-Evers, Jürgen, Dipl.-Ing.

(56) Entgegenhaltungen:
- EP-A- 0 530 485
- GB-A- 2 227 064
- US-A- 2 598 207
- US-A- 3 990 727

## Beschreibung

Die Erfindung bezieht sich auf eine Steckverbindung nach dem Oberbegriff des Anspruchs 1.

Es ist der Zweck einer vorliegenden Steckverbindung eine Verbindungsleitung mit einem Steckverbindungsteil eines Gerätes oder zwei Verbindungsleitungsabschnitte miteinander lösbar zu verbinden. Hierzu sind schon eine Vielzahl Arten von Steckverbindungen entwickelt worden.

Den bekannten Steckverbindungen ist gemeinsam, daß wenigstens ein Verrastungselement vorgesehen ist, das zwischen einer Verrastungsstellung und einer Freigabestellung manuell bewegbar an dem einen Steckverbindungsteil gelagert ist, wobei es sich um ein besonderes Bauteil handelt, das z.B. verschiebbar oder schwenkbar am ihm zugehörigen Steckverbindungsteil gelagert ist und als aktives Verrastungselement in seiner Verrastungsstellung ein passives Verrastungselement am anderen Steckverbindungsteil hintergreift und seiner Freigabestellung freigibt.

Bei dieser bekannten Ausgestaltung ist eine aufwendige Bauweise und Handhabung vorgegeben, weil das aktive Verrastungselement durch eine besondere Handhabungsmaßnahme mit der zweiten Bedienungshand und mit einem speziellen Werkzeug, z.B. einem Schraubenzieher betätigt und ggf. als besonderes Bauteil hergestellt und am zugehörigen Steckverbindungsteil gelagert und montiert werden muß. Ein weiterer Nachteil dieser bekannten Ausgestaltung besteht darin, daß die Lagerung des aktiven Verrastungselements aufgrund dessen Bewegbarkeit einem Verschleiß unterliegt, der insbesondere bei oft zu lösenden und wieder zu verbindenden Steckverbindungen zu Funktionsstörungen aufgrund einer unsicheren Verbindung führen kann.

Des weiteren ist aus der EP-A-0 530 485 eine Steckverbindung bekannt, die sämtliche Merkmale des Oberbegriffs des Anspruches 1 aufweist. Insbesondere besitzt diese Steckverbindung ein buchsenförmiges Steckverbindungsteil und ein zapfenförmiges Steckverbindungsteils, die axial zusammensteckbar und in der zusammengesteckten Position durch eine Verbindungsvorrichtung miteinander verbindbar sind. Die Verbindungsvorrichtung ist durch zwei einander gegenüberliegend angeordnete, lösbare Verrastungsvorrichtungen mit zwei am buchsenförmigen Steckverbindungsteil angeordneten ersten Verrastungselementen, welche durch zwei manuell bewegbare Betätigungselemente zwischen einer Verrastungsstellung und einer Freigabestellung quer zur Steckachse bewegbar sind, und zwei am zapfenförmigen Steckverbindungsteil einander gegenüberliegend angeordneten zweiten Verrastungselementen gebildet. Die Betätigungselemente sind am Außenumfang des buchsenförmigen Steckverbindungsteils angeordnet, erstrecken sich bezüglich der Steckachse konvex in Umfangsrichtung des buchsenförmigen Steckverbindungsteils, sind manuell gegen eine Federkraft nach innen biegbar und können die ersten Verrastungselemente durch eine nach innen gerichtete Verbiegung der Betätigungselemente in die Freigabestellung bewegen.

Der vorliegenden Erfindung liegt die Aufgabe zugrunde, eine Steckverbindung der aus der EP-A-0 530 485 bekannten Art derart auszugestalten, daß die Steckverbindung insbesondere für Saugleitungen bestmöglich eingesetzt werden kann.

Diese Aufgabe wird erfindungsgemäß durch eine Steckverbindung nach Anspruch 1 gelöst.

Gemäß der vorliegenden Erfindung ist in die Steckverbindung ein Ventil mit einem schlauchförmigen Ventilelement integriert, welches in axialer Anordnung im freien Innenraum des zapfenförmigen Steckverbindungsteils angeordnet ist und durch eine radiale, in den Zwischenraum zwischen dem schlauchförmigen Ventilelement und dem zapfenförmigen Steckverbindungsteil mündende Verbindungsleitung hydraulisch oder pneumatisch aufblähbar und selbsttätig oder aktiv kontraktierbar ist. Das schlauchförmige Ventilelements ist um das dem buchsenförigen Steckverbindungsteil zugewandte hohlzylindrische Ende des zapfenförmien Steckverbindungsteils umgelegt.

Das hohlzylindrische Ventilelement wird zum einen durch den Umschlag um das zapfenförmige Steckverbindungsteil auf einfache Weise gehalten und bildet zum anderen ein dichtes Zwischenelement zwischen dem zapfenförmigen Steckverbindungsteil und dem buchsenförmigen Steckverbindungsteil. Dadurch eignet sich die erfindungsgemäße Steckverbindung besonders gut für den Einsatz in Saugleitungen, wie z.B. an einem dentalen Technik-Arbeitsplatz.

Bei der erfindungsgemäßen Steckverbindung ist das erste, aktive Verrastungselement dadurch aus seiner Verrastungsstellung in seine Freigabestellung bewegbar, daß es mit einem elastisch biegbaren Betätigungselement so verbunden ist, daß durch manuelles Verbiegen durch Druck das Betätigungselement elastisch verbiegt, sich dabei streckt und dabei das Verrastungselement in seine Freigabestellung bewegt. Dies kann handhabungsfreundlich mit nur einer Bedienungshand durchgeführt werden. Die Rückführung des Verrastungselements in seine Verrastungsstellung erfolgt vorzugsweise selbsttätig aufgrund der Elastizität. Bei der erfindungsgemäßen Ausgestaltung kann somit das Verrastungselement starr am elastisch biegbaren Betätigungselement und letzteres starr am zugehörigen Steckverbindungsteil angeordnet werden. Dabei läßt sich in besonders vorteilhafter Weise jeweils eine einteilige Ausgestaltung verwirklichen, wodurch die Herstellung besonders einfach und kostengünstig ist. Vorzugsweise bestehen das Verrastungselement, das Betätigungselement und das zugehörige Steckverbindungsteil aus Kunststoff, wobei durch die Herstellung als Spritzgießteil eine einfache, schnelle, genaue und rationelle sowie kostengünstige Herstellung möglich ist, ohne daß es einer besonderen Montage dieser Teile am Steckverbindungsteil bedarf.

Die erfindungsgemäße Steckverbindung eignet sich vorzüglich für flexible Schlauchleitungen und insbesondere für Saugleitungen, in denen ein Unterdruck herrscht, wobei es keines besonderen Spannverschlusses bedarf, um Dichtheit zu gewährleisten. Für eine Saugleitung reicht es aus, wenn die Verrastungsvorrichtung mit dem aktiven Verrastungselement hinter einer Verrastungskante einrastet oder auch mit geringer axialer Zugwirkung an der Verrastungskante anliegt. Aufgrund des Unterdrucks und einer daraus resultierenden Zusammenziehung der Teile reicht dies bereits aus, eine dichte Verbindung der Verbindungsleitung zu gewährleisten. Deshalb eignet sich die erfindungsgemäße Steckverbindung auch sehr vorteilhaft für eine Saugleitung einer Absaugvorrichtung, insbesondere für ein medizinisches oder dentales Labor.

Die erfindungsgemäße Steckverbindung eignet sich auch sehr vorteilhaft zum Verbinden eines sogenannten Balg- oder Manschettenventils in einer Rohr- oder Schlauchleitung mit einem pneumatisch oder hydraulisch verstellbar flexiblen Ventilelement in Form eines Balges oder einer Manschette.

In den Unteransprüchen sind Merkmale enthalten, die zu einfachen und kostengünstig herstellbaren sowie handhabungsfreundlichen Bauweisen führen, die Abdichtung verbessern und dabei die Abdichtung sowohl für Unterdruck als auch Überdruck gewährleisten.

Nachfolgend werden die Erfindung und weitere durch sie erzielbare Vorteile anhand von bevorzugten Ausgestaltungen und vereinfachten Zeichnungen näher erläutert. Es zeigt
- Fig. 1: eine Steckverbindung für eine flexible hydraulische oder pneumatische Verbindungsleitung, insbesondere Schlauchleitung, im axialen Schnitt, deren Ausgestaltung auf die erfindungsgemäße Steckverbindung gemäß Fig.5-8 anwendbar ist;
- Fig. 2: den Schnitt II-II in Fig. 1;
- Fig. 3: die Steckverbindung in der Draufsicht;
- Fig. 4: eine der Fig. 1 entsprechende Ansicht einer Steckverbindung in abgewandelter Ausgestaltung;
- Fig. 5: eine erfindungsgemäße Steckverbindung für eine flexible hydraulische oder pneumatische Verbindungsleitung, insbesondere Schlauchleitung, im axialen Schnitt;
- Fig. 6: den Schnitt VI-VI in Fig. 5;
- Fig. 7: die Steckverbindung nach Fig. 5 in der Draufsicht;
- Fig. 8: ein Anwendungsbeispiel für erfindungsgemäße Steckverbindungen in einer Saugleitung einer Absaugeinrichtung für ein dentales Labor.

Die Hauptteile der Steckverbindung 1 für die hydraulische oder pneumatische Verbindungsleitung 2 sind zwei Steckverbindungsteile 3, 4, von denen das eine Steckverbindungsteil 3 am Verbindungsende der Verbindungsleitung 2 befestigt ist und das andere Steckverbindungsteil 4 an dem Körper oder Bauteil 5 angeordnet ist, an den die Verbindungsleitung 2 ansteckbar ist und wenigstens eine Verrastungsvorrichtung 6 mit zwei Verrastungselementen 7, 8, von denen das eine Verrastungselement 7 am Steckverbindungsteil 4 und das andere Verrastungselement 8 am Steckverbindungsteil 3 angeordnet ist, und mit denen die Steckverbindungsteile 3, 4 und somit die Leitung 2 und das Bauteil 5 in der zusammengesteckten Stellung lösbar einander verrastet sind, um eine unbeabsichtigte Lösung der Verbindung zu verhindern.

Bei dem Körper oder Bauteil 5 kann es sich auch um ein Verbindungsteil für einen vom Verbindungsleitungsabschnitt 2a weiterführenden Verbindungsleitungsabschnitt 2b handeln, der mit einem Anschluß-Rohrstutzen mit dem Steckverbindungsteil 4 verbunden ist, insbesondere darauf oder darin gesteckt und befestigt ist, z.B. mittels einer nicht dargestellten Schlauchklemme.

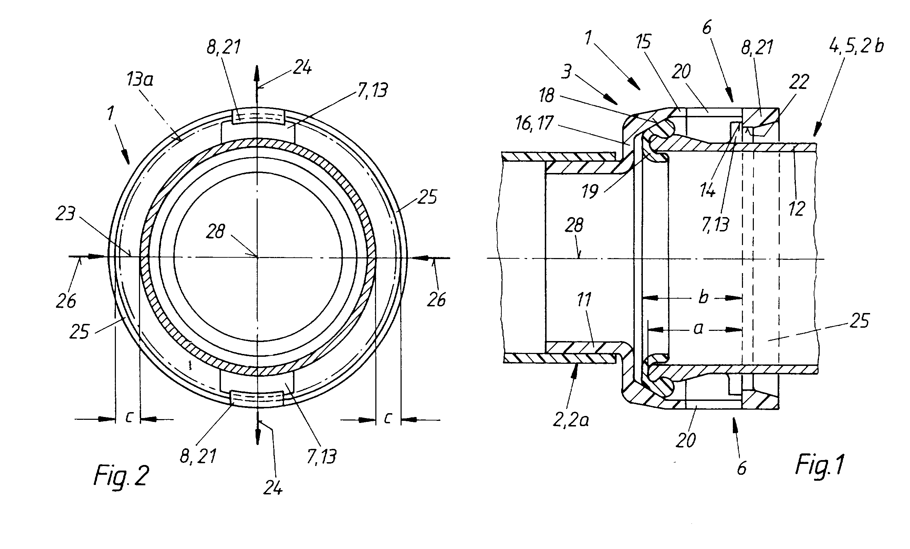

Die Verbindungsleitung 2 weist vorzugsweise einen kreisrunden Querschnitt auf, wie es Fig. 2 zeigt.

Das Steckverbindungsteil 4 weist eine hohlzylindrische Rohrwand 12 auf, auf der das zugehörige Verrastungselement 7 in Form eines Ringes oder radialen Flanschstückes 13 mit einer Verrastungskante 14 radial absteht und zwar in einem Abstand vom freien Ende der Rohrwand 12. Bei der vorliegenden Ausgestaltung mit zwei einander gegenüberliegenden Verrastungselement-Paaren sind zwei Flanschstücke 13 einander radial gegenüberliegend angeordnet. Der Abstand der Verrastungskante 14 vom freien Ende der Rohrwand 12 ist mit a bezeichnet.

Das Steckverbindungsteil 3 weist eine hier hohlzylindrische Rohrwand 15 auf, deren Innenquerschnitt etwas größer bemessen ist, als der Außenquerschnitt der Rohrwand 12, so daß letztere mit Bewegungsspiel in die Rohrwand 14 einsteckbar ist.

Der Verrastungskante 14 gegenüberliegend weist das Steckverbindungsteil 3 eine Innenschulter 16 auf, die bei der vorliegenden Ausgestaltung durch einen von der Rohrwand 15 sich radial nach innen erstreckenden Flanschabschnitt 17 gebildet ist, von dessen innerem Rand ein hohlzylindrischer Rohrstutzen 11 sich zur der Verrastungskante 14 abgewandten Seite erstreckt. Die Umfangswand des Steckverbindungsteils 3 weist somit eine Z-förmige Form auf. Im Eckenbereich zwischen der Rohrwand 15 und dem Flanschabschnitt 17 kann vorzugsweise eine Verdickung und/oder eine Hohlkegelfläche 18 angeformt sein, wobei das freie Ende der Rohrwand 12 mit der Innenschulter 16 oder der Hohlkegelfläche 18 dichtend zusammenwirkt, vorzugsweise mit Hilfe eines dazwischen angeordneten Dichtungsringes 19.

Die Steckverbindung 1 ist bezüglich einer axialen Längsmittelebene 23, die rechtwinklig einer die Mittel- bzw. Steckachse A und die Verrastungsvorrichtung 6 schneidenden axialen Längsmittelebene 24 steht, spiegelsymmetrisch ausgebildet, wie es insbesondere die Fig. 1 und 2 zeigen. Es sind somit zwei Verrastungsvorrichtungen 6 einander gegenüberliegend angeordnet.

Bei dem bzw. den Verrastungselementen 8 handelt es sich jeweils um ein aktives Verrastungselement, die einander gegenüberliegend von der Rohrwand 15 vorragen und auf ihren den Flanschstücken 13 zugewandten Innenseiten als Verrastungsnasen 21 mit einer Hinterschneidung ausgebildet sind, wodurch eine Hinterschneidungskante 22 gebildet ist, die in der Verrastungsstellung die zugehörige Verrastungskante 14 über- und hintergreift. Der Abstand a der Verrastungskante 14, die Dicke des Dichtungsrings 19 und der Abstand b der Hinterschneidungskante 22 von der Innenschulter 16 bzw. der Hohlkegelfläche 18 sind so aufeinander abgestimmt, daß in der vorbeschriebenen Verrastungsstellung die Steckverbindungsteile 3, 4 mit einem manuellen, handhabungsfreundlich aufbringbaren axialen Druck zusammengedrückt sind, so daß der Dichtungsring 19 geringfügig zusammengedrückt ist. Hierdurch ist eine Abdichtung zwischen den Steckverbindungsteilen 3, 4 geschaffen. Wenn keine Abdichtung erforderlich ist, bedarf es keiner solchen speziellen axialen Spannung.

Wie die Fig. 1 zeigt, kann der Dichtungsring 19 C-förmig um das freie Ende des der Rohrwand 12 gelegt sein, oder er kann sich auch in einer stirnseitigen Ringnut der Rohrwand 12 oder der Innenschulter 16 bzw- Hohlkegelfläche 18 befinden, was nicht dargestellt ist.

Der Endbereich der Rohrwand 12 kann zur Stabilisierung etwas verdickt sein.

Zum Bewegen des oder der einander gegenüberliegenden Verrastungselemente 8 ist wenigstens ein die Rohrwand 12 in einem radialen Abstand c umgebendes Betätigungselement in Form eines Bogenteils vorzugsweise zwei einander gegenüberliegend angeordnete, die Rohrwand 12 in einem radialen Abstand c umgebende Bogenteile 25 vorgesehen, die bei der vorliegenden Ausgestaltung die beiden vorhandenen Verrastungselemente 7 bzw. Verrastungsnasen 21 vorzugsweise einstückig miteinander verbinden. Der Abstand c und die Steifigkeit der Bogenteile 25 ist so aufeinander abgestimmt, daß beim Zusammendrücken der Bogenteile 25 in deren mittleren Bereich entsprechend den beiden Pfeilen 26 die Verrastungsnasen 21 so weit radial auswärts entsprechend den Pfeilen 27 entgegen der elastischen Rückstellkraft der Federarme 20 bewegt werden, daß sie sich in ihrer Freigabestellung befinden, wobei ggf. auch ihre Reibungskräfte zwischen den Verrastungskanten 14 und den Hinterschneidungskanten 22 überwunden werden können. In der Freigabestellung sind die Verrastungsvorrichtungen 6 gelöst und die Steckverbindungsteile 3, 4 können axial auseinandergezogen werden.

Das Steckverbindungsteil 4 mit der hohlzylindrischen Rohrwand 12 und den Flanschstücken 13 sowie das Steckverbindungsteil 3 mit seiner Umfangswand, den Federarmen 20 und den Verrastungselementen 8 bzw. den Verrastungsnasen 21 bestehen vorzugsweise aus Kunststoff, wobei es sich um in einer Spritzgießform hergestellte Spritzgießteile handelt. Aufgrund der einteiligen Ausgestaltung der Steckverbindungsteile 3, 4 besteht die Steckverbindung 1 somit lediglich aus zwei Bauteilen, wodurch eine einfache und kostengünstige Herstellung gegeben ist.

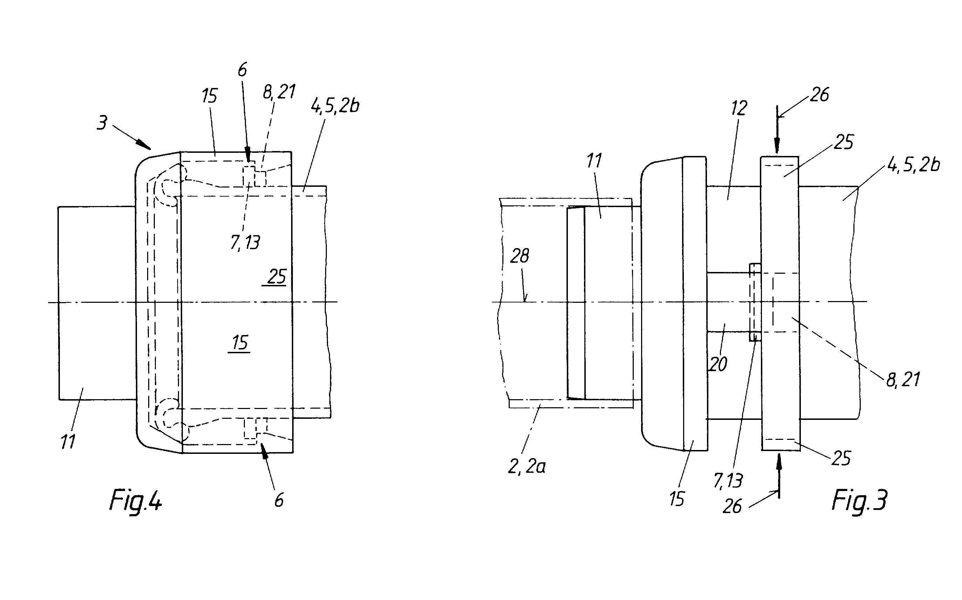

Im Rahrnen der Erfindung ist es möglich und aus verschiedenen Gründen, z.B. aus Stabilitätsgründen, vorteilhaft, die Rohrwand 15 bis zu den Verrastungsnasen 21 hin axial zu verlängern, wobei die Verrastungsnasen 21 an der Innenseite einer so verlängerten Rohrwand 15 angeformt sein können, wie es Fig. 4 zeigt. Bei einer solchen Ausgestaltung ist zum Verschieben der Verrastungsnasen 21 in deren Freigabestellung die Rohrwand 15 in ihrem freien Endbereich entsprechend den Pfeilen 26 zusammenzudrücken. In beiden vorbeschriebenen Ausgestaltungsfällen kann dies durch Übergreifen des Steckverbindungsteils mit ein und derselben Bedienungshand erfolgen, die das Steckverbindungsteil 4 hält. Hierdurch ist eine sehr einfache Handhabung gewährleistet.

Wenn die Verrastungskante 14 an einem Ringflansch 13a ausgebildet ist, wie es die Fig. 2, 6 und 10 andeutungsweise mit Strichpunktlinien zeigen, können die Steckverbindungsteile 3, 4 in jeder beliebigen und somit um die Längsmittelachse 28 verdrehten Position zusammengesteckt werden. Bei einer solchen Ausgestaltung sind der Abstand cl zwischen der Rohrwand 15, ggf. dem Bogenteil 25, und dem Ringflansch 13a und die Steifigkeit dieser Teil so zu bestimmen, daß beim Zusammendrücken der Bogenteile 25 bzw. der Rohrwand 15 entsprechend den Pfeilen 26 die Verrastungsnasen 21 entgegen den Rückstellkräften, hier gegen die Federarme 20, in ihre Freigabestellung bewegt werden.

Wenn dagegen nur die mit durchgehenden Linien dargestellten Flanschstücke 13 vorhanden sind, ist es erforderlich, die Steckverbindungsteile 3, 4 in einer solchen Drehstellung zueinander zusammenzustecken, in der die Verrastungsnasen 21 und die Flanschstücke 13 zusammenwirken können. Bei einer Ausgestaltung mit Flanschstücken 13 ist jedoch dann ein Zusammenstecken in jeder Position möglich, wenn die Verrastungsnasen 21 als Ringansatz an den Bogenteilen 25 (Fig. 1) oder am Rohrstück 15 (Fig. 4) ausgebildet sind.

Zur formschlüssigen Drehsicherung der Steckverbindungsteile 3, 4 aneinander, können ineinandergreifende Nuten und Stege zwischen den Rohrwänden 12, 15 vorgesehen sein, die formschlüssig ineinandergreifen, ggf. eine unrunde Querschnittsform für die Steckverbindungsteile 3, 4 ergeben und somit formschlüssig eine Drehsicherung schaffen. Bei einer unrunden, z.B. ovalen Querschnittsform der Steckverbindungsteile 3, 4 ist von Natur aus eine Drehsicherung ebenfalls gegeben.

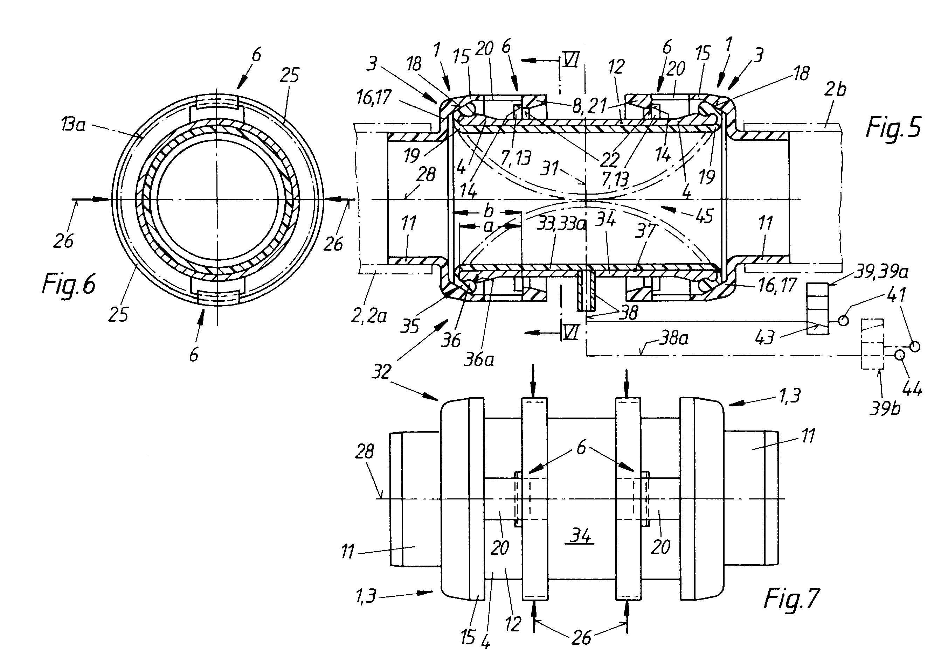

Bei der erfingungsgemäßen Steckverbindung gemäß Fig. 5 bis 7, bei der gleiche oder vergleichbare Teile mit gleichen Bezugszeichen versehen sind, sind zwei vorbeschriebene Steckverbindungen 1 bezüglich einer mittleren Querebene 31 spiegelsymmetrisch in ein Ventil 32 oder eine Drossel mit einem Ventilelement 33 in Form eines schlauchförmigen Balges bzw. Manschette 33a integriert. Bei dieser Ausgestaltung ist ein Rohrstück 34 vorzugsweise hohlzylindrischen Querschnitts vorgesehen, dessen Länge etwa seiner zweifachen Querschnittsabmessung entspricht und deren Endbereiche durch identische Rohrwandungen 12 gebildet sind, die bezüglich der Querebene 31 spiegelsymmetrisch angeordnet sind und somit mit vorbeschriebenen Flanschstücken 13 oder Ringflanschen 13a jeweils mit Verrastungskanten 14 zwei einstückig miteinander verbundene Steckverbindungsteile 4 bilden. Die Steckverbindungsteile 4 sind entsprechend dem Ausführungsbeispiel gemäß den Fig. 1 bis 4 ausgebildet, jedoch spiegelsymmetrisch zueinander angeordnet und brauchen deshalb nicht mehr beschrieben zu werden.

Das schlauchförmige Ventilelement 33 ist mit seiner Außenquerschnittsabmessung, hier seinem Durchmesser an die Innenquerschnittsabmessung des Rohrstücks 34 vorzugsweise angepaßt, so daß es mit Bewegungsspiel einsteckbar ist. Die Länge des Ventilelements 33 ist größer bemessen, als die Länge des Rohrstücks 34 und die Endbereiche des Ventilelements 33 sind radial nach außen oder noch weiter um die Stirnenden des Rohrstücks 34 umgelegt oder entsprechend vorgeformt, wobei diese umgelegten Abschnitte 35 zugleich jeweils einen Dichtungsring 19 bilden, der mit dem Flanschabschnitt 17 oder der Hohlkegelfläche 18 zusammenwirken kann. Es ist vorteilhaft, die freien Ränder des schlauchförmigen Ventilelements 33 in Form von Wülsten 36 zu verdicken, vorzugsweise in Form eines runden Wulstes 36. Hierdurch wird die Halterung des Ventilelements 33 am Rohrstück 34 stabilisiert, seine Lebensdauer vergrößert und Abdichtung verbessert. In der Außenmantelfläche des Rohrstücks 34 können vorzugsweise gerundete Ringnuten 36a für die Wülste 36 vorgesehen sein.

Das Ventilelement 33 besteht aus elastisch aufblähbarem Material, wie z.B. Gummi oder Kunststoff. Zwischen dem schlauchförmigen Ventilelement 33 und dem Rohrstück 34 ist ein ringförmiger Beaufschlagungsraum 37 vorhanden, der mittels einer hydraulischen oder vorzugsweise pneumatischen Steuereinrichtung durch eine Verbindungsleitung 38 in Form eines vorzugsweise flexiblen Rohres oder Schlauches und einem darin angeordneten Steuerventil 39 an eine Druckquelle 41 anschließbar ist.

Im mit Druck beaufschlagten Zustand des Beaufschlagungsraumes 37 wird die Manschette 33a nach innen in die strichpunktiert dargestellte Schließstellung aufgebläht, in der die einander gegenüberliegenden Wandungen der Manschette 33a mit ihren Innenflächen aneinanderliegen und den freien Durchgang der Leitung 38 verschließen.

Wenn die Manschette 33a aus einem elastisch dehnbaren Material besteht, können die elastischen Rückstellkräfte dazu ausgenutzt werden, die Manschette 33a in ihre zylindrische Ausgangsposition zurück zu bewegen, wenn die Beaufschlagung mit dem Druckmedium abgeschaltet wird und eine entsprechende Entlüftung 43 im Ventilgehäuse 39a geöffnet wird.

Es ist jedoch auch möglich, den Beaufschlagungsraum 37 zum Schließen mit Überdruck und zum Öffnen mit Unterdruck zu beaufschlagen, so daß beide Verstellbewegungen der Manschette 33a aktiv verlaufen. Hierzu ist zusätzlich eine Unterdruckquelle 44 vorzusehen, zu der ein Leitungszweig 38a führt, in dem ein Ventil 39b angeordnet und im Sinne eines Umschaltventils so funktioniert, daß in der einen Schaltstellung des Ventils 39b die Druckquelle 41 mit dem Beaufschlagungsraum 37 und in der anderen Schaltstellung die Unterdruckquelle 44 mit dem Beaufschlagungsraum 37 verbunden ist (siehe angedeutete Ausgestaltung in Fig. 5).

Bei einem Versuchsaufbau zeigte es sich, daß die Manschette 33a in seiner Schließstellung nicht eine gleichmäßige, nach innen gerichtete Ausbauchung, sondern zwei, drei oder vier segmentförmige Ausbauchungen bildet, deren Innenwandabschnitte dicht aneinanderliegen.

Im Rahmen der Erfindung ist es möglich und auch vorteilhaft, das Ventil 32 nicht als Schließventil, sondern als Strömungsbegrenzungsventil bzw. Drossel zu benutzen (nicht dargestellt), wobei die Manschette 33a einen verjüngten Durchgangsquerschnitt im Sinne einer Drossel begrenzt. Dies kann z.B. dadurch erreicht werden, daß der Druck in der Druckquelle 41 so groß bemessen wird, daß im Drosselzustand ein Gleichgewicht zwischen dem Druck und der elastischen Spannung der Manschette 33a besteht. Für genauere Drosseleinstellungen ist es vorteilhaft, die Beaufschlagungsmenge des Druckmediums zu ermitteln oder zu überwachen und so zu steuern, daß in der Drosselstellung die Verbindung mit der Druckquelle 41 unterbrochen und der Beaufschlagungsraum 37 nicht entlüftet ist.

Es ist auch möglich, das erfindungsgemäße Ventil 32 als einstellbare Drossel zu benutzen. Hierzu ist es lediglich erforderlich, die Beaufschlagungsmenge des Druckmediums entsprechend der gewünschten Größe des Durchgangsquerschnitts zu bestimmen. Dies kann z.B. durch einen Strömungsmengenmesser oder Druckmesser erfolgen.

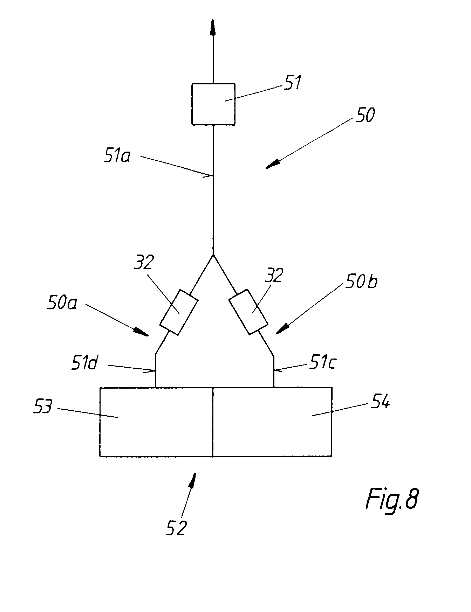

Beim Anwendungsbeispiel gemäß Fig. 8 wird das Ventil 32 als Abschaltventil eingesetzt. Hierbei ist eine Absaugeinrichtung 50 mit einer Saugvorrichtung 51 und einer Saugleitung 51a einem sogenannten dentalen Technik-Arbeitsplatz 52 zugeordnet, z.B. einer kombinierten Schleifvorrichtung 53 und Fräsvorrichtung 54 für dentale Modelle, insbesondere aus Gips, Kunststoff oder Metall, in einem dentalen Labor. Um nur den Absaugvorrichtungsteil 50a, 50b der in Betrieb genommenen Schleif- oder Fräsvorrichtung 53, 54 einzuschalten, wird der Saugleitungszweig 51b, 51c der gemeinsamen Absaugleitung 51a, der mit der nicht in Betrieb befindlichen Arbeitsmaschine 53, 54 verbunden ist, mittels des im zugehörigen Saugleitungszweig 51b, 51c befindlichen Ventils 32 geschlossen oder geöffnet. Hierzu kann jeweils ein das Druckmedium zuschaltendes Zuschaltventil 39 oder ein Umschaltventil 39b dienen, das vorzugsweise beim Einschalten des Antriebsmotors der zugehörigen Arbeitsmaschine 53, 54 selbsttätig geöffnet bzw. geschlossen wird.

Die Steckverbindung 1 eignet sich auch zum Verbinden von zwei Verbindungsteilen einer mechanischen Verrastungsvorrichtung ohne eine Verbindungsleitung.

## Patentansprüche

1. Steckverbindung (1),
mit einem buchsenförmigen Steckverbindungsteil (3) und einem zapfenförmigen Steckverbindungsteils (4), die axial zusammensteckbar und in der zusammengesteckten Position durch eine Verbindungsvorrichtung miteinander verbindbar sind,
wobei die Verbindungsvorrichtung durch zwei einander gegenüberliegend angeordnete, lösbare Verrastungsvorrichtungen (6) mit zwei am buchsenförmigen Steckverbindungsteil (3) angeordneten ersten Verrastungselementen (8), welche durch zwei einander gegenüberliegend angeordnete manuell bewegbare Betätigungselemente (25) zwischen einer Verrastungsstellung und einer Freigabestellung quer zur Steckachse (28) bewegbar sind, und zwei am zapfenförmigen Steckverbindungsteil (4) einander gegenüberliegend angeordneten zweiten Verrastungselementen (7) gebildet ist, und
wobei die Betätigungselemente (25) bezüglich der ersten und zweiten Verrastungselemente (7, 8) in um 90° verdreht angeordneten Positionen am Außenumfang des buchsenförmigen Steckverbindungsteils (3) angeordnet sind, sich in Umfangsrichtung des buchsenförmigen Steckverbindungsteils (3) bezüglich der Steckachse (28) konvex erstrecken, manuell gegen eine Federkraft nach innen biegbar sind und an ihren Enden jeweils mit den ersten Verrastungselementen (8) so verbunden sind, daß die ersten Verrastungselemente (8) durch eine nach innen gerichtete Verbiegung der Betätigungselemente (25) in ihre Freigabestellung bewegbar sind,
**dadurch gekennzeichnet**,
daß in die Steckverbindung (1) ein Ventil (32) mit einem schlauchförmigen Ventilelement (33) integriert ist, welches in axialer Anordnung im freien Innenraum des zapfenförmigen Steckverbindungsteils (4) angeordnet ist und durch eine radiale, in den Zwischenraum zwischen dem schlauchförmigen Ventilelement (33) und dem zapfenförmigen Steckverbindungsteil (4) mündende Verbindungsleitung (38) hydraulisch oder pneumatisch aufblähbar und selbsttätig oder aktiv kontraktierbar ist,
wobei der dem buchsenförmigen Steckverbindungsteil (3) zugewandte Endbereich des schlauchförmigen Ventilelements (33) um das dem buchsenförigen Steckverbindungsteil (3) zugewandte hohlzylindrische Ende des zapfenförmien Steckverbindungsteils (4) umgelegt ist.

2. Steckverbindung nach Anspruch 1,
**dadurch gekennzeichnet**,
daß das Betätigungselement (25) sich gekrümmt, insbesondere kreisbogenförmig oder kreisbogenabschnittförmig gekrümmt erstreckt.

3. Steckverbindung nach Anspruch 1 oder 2,
**dadurch gekennzeichnet**,
daß die Federkraft eine elastische Eigenspannung des Betätigungselements (25) ist.

4. Steckverbindung nach einem der vorherigen Ansprüche,
**dadurch gekennzeichnet**,
daß die Steckverbindungsteile (3, 4) eine kreisrunde oder eine ovale Querschnittsform aufweisen.

5. Steckverbindung nach einem der vorherigen Ansprüche,
**dadurch gekennzeichnet,**
daß die ersten Verrastungselemente (8) an der Buchsenwand des buchsenförmigen Steckverbindungsteils (3) angeordnet sind.

6. Steckverbindung nach Anspruch 5,
**dadurch gekennzeichnet**,
daß die ersten Verrastungselemente (8) an der Innenwandung der Buchsenwand (15) angeordnet sind.

7. Steckverbindung nach einem der vorherigen Ansprüche,
**dadurch gekennzeichnet**,
daß die ersten Verrastungselemente (8) jeweils an einem vom zugehörigen Steckverbindungsteil (3) etwa achsparallel vorragenden Tragarm (20) angeordnet sind.

8. Steckverbindung nach einem der vorherigen Ansprüche,
**dadurch gekennzeichnet**,
daß die ersten Verrastungselemente (8), die Betätigungselemente (25) und die Tragarme (20) einteilig am buchsenförmigen Steckverbindungsteil (3) angeformt sind.

9. Steckverbindung nach einem der vorherigen Ansprüche,
**dadurch gekennzeichnet**,
daß die zweiten Verrastungselemente (7) durch einander gegenüberliegende Flanschstücke (13) oder eine Ringwand (13a) gebildet sind.

10. Steckverbindung nach einem der vorherigen Ansprüche,
**dadurch gekennzeichnet**,
daß die Steckverbindungsteile (3, 4) Kunststoffspritzteile sind.

11. Steckverbindung nach einem der vorherigen Ansprüche,
**dadurch gekennzeichnet**,
daß der freie Rand des schlauchförmigen Ventilelements (33) in Form eines Wulstes (36) verdickt ist.

12. Steckverbindung nach Anspruch 11,
**dadurch gekennzeichnet**,
daß in der Außenmantelfläche des zapfenförmigen Verbindungsteils (4) eine Ringnut (36a) für den Wulst (36) vorgesehen ist.

13. Steckverbindung nach einem der vorherigen Ansprüche,
**dadurch gekennzeichnet**,
daß das schlauchförmige Ventilelement (33) aus elastischem Gummi oder Kunststoff besteht.

14. Steckverbindung nach einem der vorherigen Ansprüche,
**dadurch gekennzeichnet**,
daß zwei bezüglich einer Querebene spiegelsymmetrisch angeordnete Steckverbindungen (1) vorgesehen sind, deren zweite Steckverbindungsteile (3) durch ein gemeinsames Rohrstück (34) gebildet sind, in dem das schlauchförmige Ventilelement (33) in bezüglich der Querebene ebenfalls spiegelsymmetrischer Anordnung positioniert ist.

15. Verwendung einer Steckverbindung nach einem der vorhergehenden Ansprüche in einem dentalen Technik-Arbeitsplatz (52), der eine Absaugvorrichtung (50) und eine Saugleitung (51a) mit der Steckverbindung (1) aufweist.

## Claims

1. Connector (1),
having a socket-shaped connector part (3) and a spigot-shaped connector part (4), which are axially intermateable and in the intermated position are connectable to one another by a connecting device, wherein the connecting device is formed by two releasable latching devices (6) disposed opposite one another and having two first latching elements (8), which are disposed on the socket-shaped connector part (3) and are movable at right angles to the insertion axis (28) by means of two opposing, manually movable operating elements (25) between a latching position and a release position, and having two second latching elements (7) which are disposed opposite one another on the spigot-shaped connector part (4), and
wherein the operating elements (25) are disposed, in relation to the first and second latching elements (7, 8), in positions rotated through 90° on the outer periphery of the socket-shaped connector part (3), extend convexly relative to the insertion axis (28) in a peripheral direction of the socket-shaped connector part (3), are manually bendable inwards counter to a spring force and at their ends are connected in each case to the first latching elements (8) in such a way that the first latching elements (8) are movable into their release position by an inwardly directed bending of the operating elements (25),
**characterized in**
that integrated into the connector (1) is a valve (32) having a tubular valve element (33), which is disposed in an axial arrangement in the free interior of the spigot-shaped connector part (4) and is hydraulically or pneumatically distendable and automatically or actively contractable by means of a radial connecting line (38), which opens into the gap between the tubular valve element (33) and the spigot-shaped connector part (4),
the end region of the tubular valve element (33) directed towards the socket-shaped connector part (3) being folded around the hollow cylindrical end of the spigot-shaped connector part (4) directed towards the socket-shaped connector part (3).

2. Connector according to claim 1,
**characterized in**
that the operating element (25) extends with a curvature, in particular with a curvature in the shape of an arc or a portion of an arc.

3. Connector according to claim 1 or 2,
**characterized in**
that the spring force is an elastic internal stress of the operating element (25).

4. Connector according to one of the previous claims,
**characterized in**
that the connector parts (3, 4) have a circular or an oval cross-sectional shape.

5. Connector according to one of the previous claims,
**characterized in**
that the first latching elements (8) are disposed on the socket wall of the socket-shaped connector part (3).

6. Connector according to claim 5,
**characterized in**
that the first latching elements (8) are disposed on the inside of the socket wall (15).

7. Connector according to one of the previous claims,
**characterized in**
that the first latching elements (8) are disposed in each case on a bracket (20) projecting substantially paraxially from the associated connector part (3).

8. Connector according to one of the previous claims,
**characterized in**
that the first latching elements (8), the operating elements (25) and the brackets (20) are integrally formed on the socket-shaped connector part (3).

9. Connector according to one of the previous claims,
**characterized in**
that the second latching elements (7) are formed by opposing flange pieces (13) or an annular wall (13a).

10. Connector according to one of the previous claims,
**characterized in**
that the connector parts (3, 4) are plastic injection-moulded parts.

11. Connector according to one of the previous claims,
**characterized in**
that the free edge of the tubular valve element (33) is thickened in the form of a bead (36).

12. Connector according to claim 11,
**characterized in**
that an annular groove (36a) for the bead (36) is provided in the outer lateral surface of the spigot-shaped connector part (4).

13. Connector according to one of the previous claims,
**characterized in**
that the tubular valve element (33) is made of elastic rubber or plastic material.

14. Connector according to one of the previous claims,
**characterized in**
that two connectors (1) arranged mirror-symmetrically relative to a transverse plane are provided, the second connector parts (3) of which are formed by a common pipe piece (34), in which the tubular valve element (33) is positioned in an arrangement which is likewise mirror-symmetric relative to the transverse plane.

15. Use of a connector according to one of the previous claims in a dental laboratory workstation (52), which comprises a suction device (50) and a suction line (51a) having the connector (1).

## Revendications

1. Connecteur enfichable (1) comportant une partie de connecteur (3) en forme de douille et une partie de connecteur (4) en forme de mamelon, qui peuvent être enfichées axialement l'une dans l'autre et liées l'une à l'autre par un dispositif de liaison dans la position enfichée,
le dispositif de liaison étant formé de deux dispositifs d'encliquetage (6) avec deux premiers éléments d'encliquetage (8) disposés sur la partie de connecteur (3) en forme de douille, qui peuvent être déplacés transversalement à l'axe d'enfichage (28), à l'aide de deux éléments d'actionnement (25) disposés en vis-à-vis, déplacés manuellement, entre une position d'encliquetage et une position de déverrouillage, et deux deuxièmes éléments d'encliquetage (7) disposés mutuellement en vis-à-vis sur la partie de connecteur (4) en forme de mamelon et
les éléments d'actionnement (25), par rapport aux premiers et deuxièmes éléments d'encliquetage (7, 8), étant disposés dans des positions décalées angulairement de 90° sur le pourtour de la partie de connecteur (3) en forme de douille, présentant une forme convexe dans la direction périphérique de la partie de connecteur (3) en forme de douille par rapport à l'axe d'enfichage (28), pouvant être fléchis manuellement en direction de l'intérieur à l'encontre d'une force élastique et étant liés à leur extrémité aux premiers éléments d'encliquetage (8), de telle sorte que les premiers éléments d'encliquetage (8) puissent être amenés dans leur position de déverrouillage par une flexion des éléments d'actionnement (25) dirigée vers l'intérieur ,
caractérisé par le fait qu'une valve (32) avec un élément de valve (33) réalisé sous forme de tuyau souple est intégrée dans le connecteur enfichable (1), valve qui est disposée axialement dans l'espace libre intérieur de la partie de connecteur (4) en forme de mamelon et peut être gonflée hydrauliquement ou pneumatiquement et contractée de manière automatique ou par une action grâce à une conduite de liaison (38) qui débouche radialement dans l'espace intermédiaire entre l'élément de valve (33) en forme de tuyau souple et la partie de connecteur (4) en forme de mamelon,
la partie extrêmale tournée vers la partie de connecteur (3) en forme de douille de l'élément de valve (33) en forme de tuyau souple étant disposée autour de l'extrémité cylindrique creuse de la partie de connecteur (4) en forme de mamelon tournée vers la partie de connecteur (3) en forme de douille.

2. Connecteur enfichable selon la revendication 1, caractérisé par le fait que l'élément d'actionnement (25) est courbé, notamment est courbé en arc de cercle ou en segment d'arc de cercle.

3. Connecteur enfichable selon la revendication 1 ou 2, caractérisé par le fait que la force élastique est une contrainte propre élastique de l'élément d'actionnement (25).

4. Connecteur enfichable selon une des revendications précédentes, caractérisé par le fait que les parties de connecteur enfichable (3, 4) ont en section transversale une forme circulaire ou ovale.

5. Connecteur enfichable selon une des revendications précédentes, caractérisé par le fait que les premiers éléments d'encliquetage (8) sont disposés sur la paroi de la partie de connecteur (3) en forme de douille.

6. Connecteur enfichable selon la revendication 5, caractérisé par le fait que les premiers éléments d'encliquetage (8) sont disposés sur la face intérieure de la paroi de douille (15).

7. Connecteur enfichable selon une des revendications précédentes, caractérisé par le fait que les premiers éléments d'encliquetage (8) sont disposés sur un bras de support (20) qui fait saillie par rapport à la partie de connecteur (3) en forme de douille et est sensiblement parallèle à celle-ci.

8. Connecteur enfichable selon une des revendications précédentes, caractérisé par le fait que les premiers éléments d'encliquetage (8), les éléments d'actionnement (25) et les bras de support (20) sont formés d'une pièce sur la partie de connecteur (3) en forme de douille.

9. Connecteur enfichable selon une des revendications précédentes, caractérisé par le fait que les deuxièmes éléments d'encliquetage (7) sont formés de tronçons de brides (13) mutuellement en vis-à-vis ou d'une paroi annulaire (13a).

10. Connecteur enfichable selon une des revendications précédentes, caractérisé par le fait que les partie de connecteur enfichable (3, 4) sont des pièces en matière plastique moulée par injection.

11. Connecteur enfichable selon une des revendications précédentes, caractérisé par le fait que le bord libre de l'élément de valve (33) en forme de tuyau est épaissi en forme de bourrelet (36).

12. Connecteur enfichable selon une des revendications précédentes, caractérisé par le fait qu'une gorge annulaire (36a) pour le bourrelet (36) est prévue dans la surface périphérique extérieure de la partie de connecteur (4) en forme de mamelon.

13. Connecteur enfichable selon une des revendications précédentes, caractérisé par le fait que l'élément de valve (33) en forme de tuyau souple est réalisé en caoutchouc ou en une matière plastique élastique.

14. Connecteur enfichable selon une des revendications précédentes, caractérisé par le fait qu'il est prévu deux connecteurs enfichables (1), disposés symétriquement par rapport à un plan transversal, dont les parties de connecteur (3) sont formées par un tronçon de tube (34) commun dans lequel l'élément de valve (33) en forme de tuyau souple est disposé également symétriquement par rapport au plan transversal.

15. Utilisation d'un connecteur enfichable selon une des revendications précédentes dans un poste de travail dentaire (52) qui comporte un dispositif d'aspiration (50) et une conduite d'aspiration (51a) pourvus du connecteur enfichable (1).
